Europäisches Patentamt

European Patent Office

Office européen des brevets

(11) Numéro de publication: **0 014 299**
**B1**

(12) **FASCICULE DE BREVET EUROPEEN**

(45) Date de publication du fascicule de brevet:
31.03.82

(51) Int. Cl.³: **B 60 T 17/22**

(21) Numéro de dépôt: **79401044.7**

(22) Date de dépôt: **19.12.79**

(54) **Indicateur de chute de pression pour double circuit de freinage.**

(30) Priorité: **19.01.79 FR 7901308**

(43) Date de publication de la demande:
**20.08.80 Bulletin 80/17**

(45) Mention de la délivrance du brevet:
**31.03.82 Bulletin 82/13**

(84) Etats contractants désignés:
**DE GB IT SE**

(56) Documents cités:
**FR-A-2 244 654**
**US-A-3 532 390**

(73) Titulaire: **SOCIETE ANONYME D.B.A., 43/47 Avenue de la Grande Armée, F-75116 Paris (FR)**

(72) Inventeur: **Chéron, Jean-Marc, 7 rue Maincourt Résidence la Pommeraie, F-77230 Longperrier (FR)**
Inventeur: **Levrai, Roland, 9 bis rue Monmousseau, F-93240 Stains (FR)**

(74) Mandataire: **Poidatz, Emmanuel et al, Service Brevets Bendix 44 rue François 1er, F-75008 Paris (FR)**

Indicateur de chute de pression pour double circuit de freinage

La présente invention a essentiellement pour objet un perfectionnement à un indicateur de chute de pression pour un dispositif de freinage à deux circuits indépendants, qui permet de déceler un déséquilibre entre les pressions d'alimentation des deux circuits et, en conséquence, de détecter les fuites de fluide survenant dans l'un des circuits.

Les indicateurs de chute de pression comportent en général un piston mobile dans un boîtier, qui est sensible à une différence entre les pressions régnant dans les circuits de freinage et qui se déplace pour coopérer avec un élément formant contacteur de façon à fermer un circuit électrique commandant le fonctionnement d'un dispositif de signalisation. Ces indicateurs de chute de pression possèdent un piston normalement au repos dont le déplacement survient lorsqu'il existe une différence de pression entre les deux circuits de freinage qui leur sont associés.

Le document FR-A-2 244 654 décrit en sa figure 1 un indicateur dont l'élément formant contacteur est actionné par une tige basculante elle-même entraînée par le piston mobile lors de ses déplacements. On remarque cependant que la tige basculante est susceptible d'être prise en pincement entre une arête du piston et une arête du boîtier lorsque le piston est déplacé en cas de défaillance et risque d'endommager l'une ou l'autre de ces arêtes. D'autre part, ce type de contacteur à tige basculante ne peut être associé à des indicateurs dont le piston mobile demeure en position déplacée après apparition d'une défaillance; en effet, en ce cas, sous l'action de son propre ressort de rappel, la tige basculante provoquerait le retour du piston mobile et la désactivation du contacteur.

L'invention a pour objet un indicateur de chute de pression pour double circuit de freinage du type dans lequel un plongeur sollicité par des moyens élastiques commande un contact électrique lorsqu'à la suite d'un déséquilibre de pression provoquant le déplacement d'un piston, l'extrémité du plongeur quitte une plage dudit piston pour descendre dans une gorge adjacente à ladite plage. Un tel appareil est décrit par exemple dans le brevet US-A-3 532 390.

L'indicateur, objet de l'invention, est de ce dernier type et caractérisé en ce que l'extrémité du plongeur est solidaire d'une tête de plus grandes dimensions s'étendant sensiblement perpendiculairement à l'axe de ladite extrémité, ladite tête étant susceptible de coulisser et basculer dans une cavité renfermant les moyens élastiques qui la sollicitent vers un épaulement interne de ladite cavité, contre lequel elle est en appui lorsque l'extrémité du plongeur est descendue dans ladite gorge et sur une partie duquel épaulement elle est susceptible de basculer pour permettre l'inclinaison de l'extrémité du plongeur lors du passage de ladite extrémité du plongeur de la gorge à la plage précitées correspondant au retour en position d'équilibre du piston de l'indicateur.

On conçoit que grâce à une telle caractéristique, il est désormais impossible d'endommager le piston de l'indicateur de déséquilibre par l'extrémité de son plongeur lors d'une remise en service, comme cela serait le cas dans l'indicateur décrit dans le brevet US-A-3 532 390 précité. Ce perfectionnement s'appliquer d'ailleurs à tous les types d'indicateurs de chute de pression, comme on le verra à la lecture de la description du fonctionnement du dispositif.

On décrira maintenant un mode de réalisation préféré de l'invention en se référant aux dessins annexés dans lesquels:

la figure 1 montre une bougie d'indicateur de chute de pression selon l'invention dans une position correspondant à l'équilibre des pressions dans les deux circuits de freinage;

la figure 2 montre une bougie d'indicateur de chute de pression selon l'invention dans une position correspondant à une défaillance d'un des deux circuits de freinage; et

la figure 3 montre la bougie des figures 1 et 2 dans une position intermédiaire, c'est-à-dire correspondant au passage de la position qu'elle occupe à la figure 2 à celle qu'elle occupe à la figure 1, avec inclinaison de l'extrémité du plongeur facilitant ledit passage.

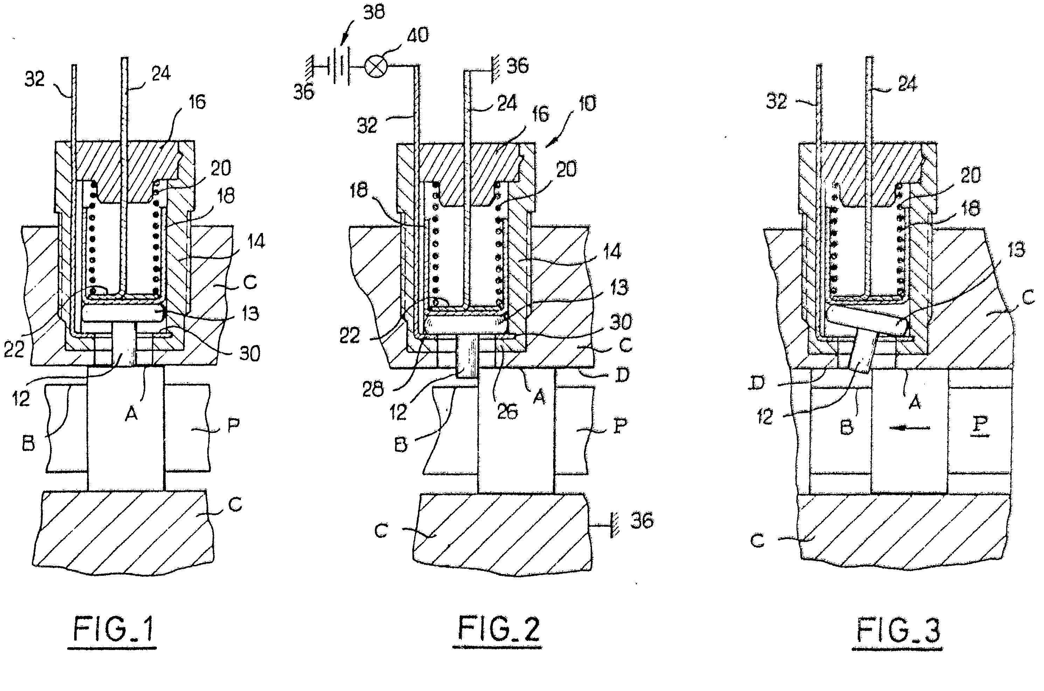

La structure de la bougie sera maintenant décrite en se référant aux figures 1 à 3.

La bougie désignée dans son ensemble par la référence 10 est montée à travers la paroi du corps C d'un indicateur de chute de pression d'un type connu, dans l'alésage D duquel coulisse un piston P. Ce piston P présente une plage A prévue pour coopérer avec l'extrémité 12 du plongeur et une gorge B adjacente à la plage A.

L'extrémité 12 est susceptible de descendre dans la gorge B lors d'un déplacement vers la droite du piston, les divers éléments de l'ensemble prenant la position représentée à la figure 2.

Une tête 13 est solidaire de l'extrémité 12 du plongeur et est coaxiale à cette dernière.

Dans l'exemple représenté, la tête 13 consiste en un disque à bord arrondi susceptible de coulisser et de basculer dans la cavité définie par le corps 14 de la bougie fermée par un couvercle 16, tout deux réalisés en matériau isolant. Le corps 14 est vissé dans un orifice taraudé débouchant dans l'alésage D du corps C de l'indicateur de chute de pression.

Dans le corps 14 est monté coulissant un piston creux 18 sollicité par un ressort hélicoïdal 20 contre la tête 13 du plongeur. Entre la dernière spire du ressort 20 et le fond du piston creux 18 est disposé un anneau 22 prolongé par une tige 24 qui traverse le couvercle 16 à coulissement doux.

Dans sa partie inférieure, si l'on considère le dessin, le corps 14 comporte un bord rentrant 26 sur l'épaulement 28 duquel est appliquée une rondelle de laiton 30 prolongée par un conducteur électrique 32 noyé dans le corps 14 dont il sort parallèlement à la tige 24. .

On a montré à la figure 2 l'alimentation électrique du système qui vient d'être décrit, à savoir: une masse 36, une batterie 38, et un indicateur (qui peut être une lampe) 40, relié au conducteur 32. La masse 36 est également reliée à la tige 24 qui est en matériau conducteur de l'électricité comme le sont également le piston creux 18, le disque 13 du plongeur ainsi que l'extrémité 12 de ce dernier.

Le fonctionnement du dispositif qui vient d'être décrit est le suivant:

Lorsque les pressions dans les deux circuits de freinage sont équilibrées, le piston P de l'indicateur de chute de pression se trouve dans la position dans laquelle il est représenté à la figure 1. L'extrémité 12 du plongeur est appliquée sur la plage A du piston P sous l'action du ressort 20. Le disque de la tête 13 n'est pas en contact avec la rondelle 30, le circuit électrique d'alimentation de la lampe 40 est ouvert et cette dernière est éteinte.

Lorsqu'apparaît un déséquilibre de pression important, le piston se déplace (vers la droite dans l'exemple représenté) et l'extrémité 12 du plongeur quitte la plage A pour tomber dans la gorge B. Lors de la descente du plongeur, la tête 13 vient prendre contact avec la rondelle 30. Le circuit d'alimentation de la lampe 40 se trouve fermé, d'une part du fait que l'extrémité 12 du plongeur est en appui contre l'épaulement existant entre la plage A et la gorge B du piston qui se trouve à la masse 36 et d'autre part grâce à la liaison électrique: tête 13, anneau 22, tige 24, masse 36.

Lorsque le piston P revient à sa position d'équilibre (d'une façon qui sera décrite plus en détail ci-après), on se trouve dans une phase intermédiaire entre celle de la figure 2 et celle de la figure 1, laquelle est représentée à la figure 3.

Le retour à la position d'équilibre du piston P montré à la figure 3 s'effectue par un déplacement vers la gauche. L'épaulement défini par la gorge B et la plage A pousse sur l'extrémité 12 du plongeur qui fait basculer le disque 13 à l'encontre de l'action du ressort 20 agissant par le piston creux 18. Une fois la face de l'extrémité 12 (de préférence plane) arrivée au niveau de la plage A, le basculement cesse et le piston P, le plongeur et les autres éléments du dispositif reprennent les positions dans lesquelles ils sont représentés à la figure 1, la lampe 40 étant à nouveau éteinte.

Il y a lieu de faire quelques remarques au sujet de l'utilisation de la bougie d'indicateur de chute de pression en fonction du type d'appareil auquel elle est associée.

Si l'indicateur de chute de pression comporte une bague provoquant un recentrage automatique du piston lors du rétablissement de l'intégrité des deux circuits de freinage, le piston P est soumis à une force suffisante pour faire basculer le plongeur. On obtient alors un réarmement automatique du dispositif.

Si l'indicateur de chute de pression comporte un piston P équilibré par deux ressorts antagonistes agissant sur ses faces d'extrémité, il convient d'envisager deux types de fonctionnement suivant les raideurs relatives de ces ressorts de recentrage et du ressort 20 associé au plongeur.

Le ressort 20 étant relativement faible, la force du ressort de recentrage, comprimé lors de l'apparition d'un déséquilibre de pression, est suffisante pour faire basculer le plongeur lorsque cesse ce déséquilibre (aussi bien lorsque cesse le freinage qu'après une réparation du circuit défaillant). L'alimentation de la lampe 40 est alors fugace, mais il est possible de lui associer un dispositif électrique de contact maintenu si on le désire.

Le ressort 20 étant relativement fort, la force du ressort de recentrage, comprimé lors de l'apparition d'un déséquilibre de pression n'est pas suffisante pour faire basculer le plongeur et le contact électrique indiquant le déséquilibre est maintenu mécaniquement. Pour faciliter le réarmement du dispositif, on a prévu la tige 24 sur laquelle il suffit de tirer pour neutraliser l'action du ressort 20 qui est comprimé par l'anneau 22 ainsi déplacé vers le haut.

Même dans cette dernière éventualité de fonctionnement, la bougie objet de l'invention permet d'éviter, grâce à son plongeur éclipsable, toute détérioration de l'extrémité du plongeur ou du piston de l'indicateur de chute de pression dans le cas où le réparateur a omis de procéder au réarmement du dispositif à l'aide de la tige 24. Il peut se produire en effet que la première application des freins suivant une réparation provoque un retour brutal du piston en raison d'un déséquilibre intempestif des pressions dans les deux circuits.

**Revendications**

1. Indicateur de chute de pression, pour double circuit de freinage, du type dans lequel un plongeur (12, 13), sollicité par des moyens élastiques (20) en direction d'un piston (P), commande un contact électrique (13, 30) lorsque, à la suite d'un déséquilibre de pression provoquant le déplacement dudit piston (P), l'extrémité (12) du plongeur quitte une plage (A) dudit piston (P) pour descendre dans une gorge (B) adjacente à ladite plage (A), caractérisé en ce que l'extrémité (12) du plongeur est solidaire d'une tête (13) de plus grandes dimensions s'étendant sensiblement perpendiculairement à l'axe de ladite extrémité (12), ladite tête (13) étant susceptible de coulisser et de basculer dans une cavité renfermant lesdits moyens élastiques (20), ces derniers sollicitant ladite tête (13) vers un épaulement interne (28) de ladite cavité, contre lequel elle est en appui lorsque l'extrémité (12) du plongeur est descendue dans ladite gorge (B), et sur une partie duquel épaulement elle est susceptible de basculer pour permettre l'inclinaison de l'extrémité (12) du plongeur lors du passage de ladite extrémité du plongeur de la gorge (B) à la plage (A) précitées correspondant au retour en position d'équilibre du piston (P) de l'indicateur.

2. Indicateur de chute de pression selon la revendication 1, caractérisé en ce que ladite tête (13) du plongeur consiste en un disque à bord arrondi, à partir duquel se projette axialement ladite extrémité (12).

3. Indicateur de chute de pression selon l'une ou l'autre des revendications 1 et 2, caractérisé en ce qu'il comprend un piston creux (18) monté coulissant dans ladite cavité, et interposé entre lesdits moyens élastiques (20) et ladite tête du plongeur (13).

4. Indicateur de chute de pression selon la revendication 3, caractérisé en ce qu'il comprend une tige (24) associée auxdits moyens élastiques (20) de telle manière qu'une traction exercée sur ladite tige annule la force exercée par les moyens élastiques (20) sur ledit piston creux (18).

5. Indicateur de chute de pression selon la revendication 4, caractérisé en ce qu'il comprend un corps principal (C) dans lequel coulisse le piston (P) sensible au déséquilibre de pression et un corps secondaire (14) fixé audit corps principal (C) et dans lequel est définie ladite cavité.

6. Indicateur de chute de pression selon la revendication 5, caractérisé en ce que ledit corps secondaire (14) comporte un couvercle (16) obturant ladite cavitée et contre lequel prennent appui lesdits moyens élastiques (20), ladite tige (24) traversant ledit couvercle (16) à coulissement doux.

7. Indicateur de chute de pression selon la revendication 6, caractérisé en ce que ledit corps secondaire (14) et ledit couvercle (16) sont en matériau isolant, ladite tige (24), lesdits moyens élastiques (20), ledit piston creux (18) et ledit plongeur (12, 13) étant en matériau conducteur, et que ledit contact comprend une rondelle (30) en matériau conducteur appliquée sur ledit épaulement interne (28) de la cavité et prolongée par un conducteur (32) noyé dans ledit corps secondaire (14) et se projetant hors de ce dernier.

**Patentansprüche**

1. Druckfallanzeiger für eine Zweikreisbremsanlage, bei der ein Steuerglied (12, 13), das durch elastische Mittel (20) in Richtung auf einen Kolben (P) vorgespannt ist, einen elektrischen Kontakt (13, 30) steuert, während der Endabschnitt (12) des Steuergliedes als Folge einer die Verschiebung des Kolbens (P) hervorrufenden Druckdifferenz eine Fläche (A) des Kolbens (P) verläßt, um in eine Vertiefung (B) neben der Fläche (A) einzutauchen, dadurch gekennzeichnet, daß der Endabschnitt (12) des Steuergliedes mit einem Kopf (13) größerer Abmessungen fest verbunden ist, der sich im wesentlichen senkrecht zur Achse des Endabschnittes (12) erstreckt, und daß der Kopf (13) in einer die elastischen Mittel (20) aufnehmenden Kammer gleit- und kippbar ist, wobei die elastischen Mittel den Kopf (13) gegen eine innere Schulter (28) der Kammer vorspannen, an der er anliegt, wenn der Endabschnitt (12) des Steuergliedes in die Vertiefung (B) eingetaucht ist, und wobei der Kopf auf einem Abschnitt der Schulter kippbar ist, um eine Schrägstellung des Endabschnittes (12) des Steuergliedes zu ermöglichen, wenn der Endabschnitt des Steuergliedes bei einer Rückkehr des Kolbens (P) des Druckfallanzeigers in die Gleichgewichtsstellung sich aus der Vertiefung (B) auf die obengenannte Fläche (A) bewegt.

2. Druckfallanzeiger nach Anspruch 1, dadurch gekennzeichnet, daß der Kopf (13) des Steuergliedes aus einer Scheibe mit abgerundetem Rand besteht, von dem der Endabschnitt (12) axial vorsteht.

3. Druckfallanzeiger nach Anspruch 1 oder 2, gekennzeichnet durch einen hohlen Kolben (18), der in der Kammer gleitbar gelagert ist und zwischen den elastischen Mitteln (20) und dem Kopf des Steuergliedes (13) angeordnet ist.

4. Druckfallanzeiger nach Anspruch 3, gekennzeichnet durch eine Stange (24), die den elastischen Mitteln (20) so zugeordnet ist, daß eine auf die Stange ausgeübte Zugkraft die von den elastischen Mitteln (20) auf den hohlen Kolben (18) ausgeübte Kraft ausgleicht.

5. Druckfallanzeiger nach Anspruch 4, gekennzeichnet durch einen Hauptkörper (C), in dem der auf eine Druckdifferenz ansprechende Kolben (P) gleitet, und einen Hilfskörper (14), der am Hauptkörper (C) befestigt ist und in dem die Kammer gebildet ist.

6. Druckfallanzeiger nach Anspruch 5, dadurch gekennzeichnet, daß der Hilfskörper (14) einen Deckel (16) aufweist, der die Kammer verschließt und an der die elastischen Mittel (20) anliegen, wobei die Stange (24) den Deckel (16) gleitend durchdringt.

7. Druckfallanzeiger nach Anspruch 6, dadurch gekennzeichnet, daß der Hilfskörper (14) und der Deckel (16) aus isolierendem Material bestehen, daß die Stange (24), die elastischen Mittel (20), der hohle Kolben (18) und das Steuerglied (12, 13) aus leitendem Material bestehen, und daß der Kontakt eine Scheibe (30) aus leitendem Material aufweist, die an der inneren Schulter (28) der Kammer anliegt und durch einen Leiter (32) verlängert ist, der im Hilfskörper (14) eingebettet ist und aus diesem vorsteht.

## Claims

1. A pressure failure indicator for dual brake circuit, of the type in which a plunger (12, 13) which is loaded by a resilient means (20) towards a piston (P), controls an electrical contact (13, 30) when, as a result of a pressure imbalance causing displacement of said piston (P), the end (12) of the plunger leaves a surface (A) of said piston (P) to fall down into a groove (B) adjacent to said surface (A), characterized in that the end (12) of the plunger ist integral with a head (13) of greater dimensions extending approximately perpendicularly to the axis of said end (12), said head (13) being able to slide and rock in a cavity which encloses said resilient means (20), the latter urging said head (13) towards an internal shoulder (28) of said cavity, against which it is bearing when the end (12) of the plunger has fallen into said groove (B) and against a portion of which it is able to rock for permitting a tilting of said end (12) of the plunger when said end of the plunger is shifted from said groove (B) to said surface (A) upon return of said piston to its equilibrium position.

2. A pressure failure indicator according to claim 1, characterized in that said head (13) of the plunger is comprised of a disk having a rounded edge, from which projects axially said end (12).

3. A pressure failure indicator according to either claim 1 or 2, characterized in that it comprises a hollow piston (18) slidably mounted in said cavity and interposed between said resilient means (20) and said head (13) of the plunger.

4. A pressure failure indicator according to claim 3, characterized in that it comprises a rod (24) associated with said resilient means (20) in such manner that a traction exerted on said rod inhibits the force exerted by said resilient means (20) on said hollow piston (18).

5. A pressure failure indicator according to claim 4, characterized in that it comprises a main body (C) in which slides the piston (P) responsive to the pressure imbalance and a secondary body (14) attached to said main body (C) and in which is defined said cavity.

6. A pressure failure indicator according to claim 5, characterized in that said secondary body (14) comprises a cover (16) closing said cavity and against which bears said resilient means (20), said rod passing through said cover (16) in a sliding manner.

7. A pressure failure indicator according to claim 6, characterized in that said secondary body (14) and said cover (16) are made of insulating material, said rod (24), said resilient means (20), said hollow piston (18) and said plunger (12, 13) being made of conductive material, and that said contact comprises a washer (30) made of conductive material and in engagement with said internal shoulder (28) of the cavity and extended by a conductive lead (32) located within said secondary body (14) and projecting outside the latter.

FIG.1

FIG.2

FIG.3

0 014 299